# EUROPÄISCHE PATENTSCHRIFT

(11) **EP 2 598 774 B1**
(45) Veröffentlichungstag und Bekanntmachung des Hinweises auf die Patenterteilung: **25.02.2015**
(21) Anmeldenummer: 11735381.3
(22) Anmeldetag: 09.07.2011
(51) Int. Cl.: F16D 3/12, F16F 15/134, F16F 15/16

(54) **TORSIONSSCHWINGUNGSDÄMPFER**
TORSIONAL VIBRATION DAMPER
AMORTISSEUR D'OSCILLATIONS DE TORSION

(30) Priorität: 27.07.2010 DE 102010032400
(43) Veröffentlichungstag der Anmeldung: 05.06.2013
(73) Patentinhaber: Voith Patent GmbH, 89522 Heidenheim (DE)
(72) Erfinder: POLIFKE, Gregor, 89537 Giengen (DE); BROCKMANN, Rolf, 89522 Heidenheim (DE); KOVACEVIC, Miroslav, 89522 Heidenheim (DE); MÜLLER, Philipp, 74426 Bühlerzell (DE); SEITZ, Gunther, 89547 Heuchlingen (DE)
(74) Vertreter: Dr. Weitzel & Partner
(86) Internationale Anmeldenummer: PCT/EP2011/003434
(87) Internationale Veröffentlichungsnummer: WO 2012/013293

(56) Entgegenhaltungen:
- DE-A1- 19 939 030
- DE-A1- 19 958 813
- FR-A1- 2 741 928
- FR-A1- 2 851 313
- US-A- 5 899 311

## Beschreibung

Die Erfindung betrifft eine Vorrichtung zur Dämpfung von Schwingungen. Solche Vorrichtungen können in Antriebssträngen mit und ohne Drehmomentübertragungsfunktion eingesetzt werden. Die Antriebsstränge können einen Verbrennungsmotor oder einen Elektromotor umfassen. Insbesondere werden solche Vorrichtungen zur Dämpfung von Schwingungen als Torsionsschwingungsdämpfer für einen Verbrennungsmotor oder als Zweimassenschwungrad eingesetzt. Siehe den Oberbegriff von Anspruch 1.

US 55 73 460 zeigt und beschreibt eine elastische Kupplung in Scheibenbauweise, umfassend zwei Kupplungshälften, die begrenzt gegeneinander verdrehbar und über elastische Kupplungselemente miteinander verbunden sind. Im radial äußeren Bereich eines Innenraumes befinden sich Dämpfungskammern, die mit einem Dämpfungsmedium füllbar sind.

Kupplungen der genannten Art haben die Aufgabe, die Laufruhe von Antrieben mit Brennkraftmaschinen, insbesondere in Fahrzeugen, in allen Betriebs- und Drehzahlbereichen sicherzustellen. Insbesondere sollten störende Torsionsschwingungen vom Antriebsstrang ferngehalten werden.

Die Elastizität der Kupplung ist so gewählt, dass die kritische Drehzahl des aus Motor und Getriebe bestehenden Massensystems genügend weit unterhalb des Betriebsbereichs liegt. Dabei sollen beim Durchfahren der kritischen Drehzahl keine zu großen Amplituden und Torsionsmomente in den Antriebselementen entstehen. Wesentlichen Beitrag dazu leistet eine auf den Antriebsstrang abgestimmte Dämpfungseinrichtung in der Kupplung selbst, nämlich eine hydraulische Dämpfung durch Verdrängung von Dämpfungsmedium durch definierte Spalte. Das Problem dabei ist, dass je nach Motortyp (Otto-Motor, Diesel-Motor) oder Zylinderzahl beziehungsweise Zylinder-Anordnung (Reihenmotor, V-Motor) oder auch Getriebe ein unterschiedliches Drehschwingungsverhalten vorliegt.

DE 10 2005 046 334 A1 beschreibt einen Torsionsschwingungsdämpfer gemäß dem Oberbegriff von Anspruch 1. Darin ist eine Verschleißschale vorgesehen, die sich radial außerhalb einer jeden Bogenfeder in deren Längsrichtung erstreckt und der Führung der Bogenfeder dient.

Ähnliches ist aus DE 10 2006 046 601 A1 bekannt geworden. Siehe dort Kunststoffteil 16. Weitere Torsionsschwingungsdämpfer sind aus den Dokumenten FR 2851313 und US 5 899 311 bekannt.

Von einem Torsionsschwingungsdämpfer wird verlangt, dass er die vom Motor erzeugten Drehschwingungen auf effiziente Weise dämpft. Insbesondere wird eine "weiche" Federcharakteristik angestrebt, um die Resonanzfrequenz des Dämpfers möglichst weit abzusenken. Die Automobilhersteller verlangen ferner ein geringes Gewicht und ein geringes Bauvolumen. Im Zeitalter harten Wettbewerbs sind aber die Herstellungskosten ganz besonders wichtig. Bezüglich aller dieser Anforderungen ist eine Optimierung dringend erwünscht.

Der Erfindung liegt die Aufgabe zugrunde, einen Torsionsschwingungsdämpfer gemäß dem Oberbegriff von Anspruch 1 derart zu gestalten, dass er seine Dämpfungsfunktion gleich gut wie bekannte Dämpfer, oder besser als solche erfüllt und dass er einfacher im Aufbau und daher kostengünstiger in der Herstellung ist. Zugleich kann je nach konstruktiver Ausführung das Gewicht geringer als bei bekannten Dämpfern sein.

Diese Aufgabe ist bei einem Torsionsschwingungsdämpfer gemäß Anspruch 1 gelöst.

Der Kerngedanke der Erfindung besteht in einer besonderen Führungs- und Anschlageinrichtung, die jeder Feder zugeordnet ist. Die Führungs- und Anschlageinrichtung umfasst jeweils zwei bogenförmige oder geradlinige Führungselemente zum Abstützen und Führen von bogenförmigen oder geradlinigen Federn. Ganz entscheidend ist, dass jeder Feder zwei Führungselemente zugeordnet sind, jeweils eins auf einer Seite der Längsachse der betreffenden Feder. Jedes Führungselement deckt einen Teil des radial äußeren Quadranten der Feder ab. Sie bildet somit eine Stütze und Führung für die Feder, und zwar nicht nur gegen eine Bewegung in radialer, sondern auch in axialer Richtung.

Ganz wichtig ist, dass die beiden Führungselemente, die einer Feder zugeordnet sind, in ihren radial äußersten Bereichen einen axialen Abstand zueinander aufweisen. Durch diesen Abstand kann die Mittelscheibe hindurchgeführt werden. Dieser Durchgriff ist vorteilhaft, weil dann auch die Dämpfungskammern radial weit außen angeordnet werden können und eine entsprechend große Wirkung der Dämpfung entfalten. Das Dämpfungssystem kann ein Reibdämpfungselementsystem, ein hydraulisches Dämpfungssystem oder eine Kombination dieser beiden sein.

Ein Führungselement kann zwei Anschlagbacken aufweisen, die beide mit ein und derselben Seitenscheibe zusammenarbeiten. Die Feder stützt sich in unbelastetem Zustand mit ihren beiden Federenden FA und FB zugleich an den Anschlagbacken A und B ab. Bei Einfederung stützt sie sich mit ihrem einen Federende FA nur noch an der Anschlagbacke A ab, und mit ihrem anderen Federende FB nur noch an der dem Federende FB zugeordneten Anlagefläche MB der Mittelscheibe. Alternativ dazu ist bei entgegengesetzter Einfederung das Federende FB mit der Anschlagbacke B in Kontakt, während das Federende FA sich an der dem Federende FA zugeordneten Anschlagfläche MA der Mittelscheibe abstützt.

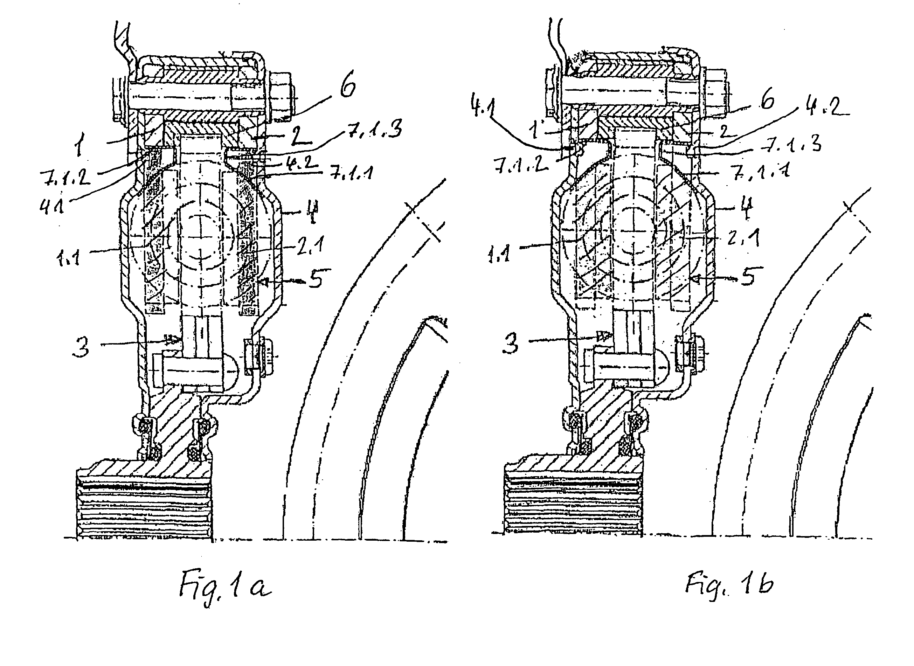

Im Normalfall wirken immer zwei Führungselemente beidseits der Bogenfeder zusammen, so wie in den Figuren 1a und 1b dargestellt.

Das Führungselement und die beiden Anschlagbacken können miteinander ein einziges Bauteil bilden. In diesem Fall sind die genannten drei Elemente nicht nur aus drei Teilen zusammengefügt, sondern von vornherein als ein einziges Teil hergestellt. In jedem Falle sollten die drei Teile aus einem verschleißarmen Material bestehen.

Die Führungs- und Anschlageinrichtung erfüllt die folgenden Funktionen:
- radiale und axiale Federabstützung;
- radiale und axiale Federführung;
- Fliehkraftabstützung;
- Federführung während des Einfederns;
- Übertragung einer Kraft aufgrund des Drehmomentes auf die Federn;
- Vergrößerung der Abstütz- und Auflagefläche, insbesondere in axialer Richtung des Torsionsschwingungsdämpfer, um ausreichende Kraftübertragungen zwischen Seitenscheiben und allen Federn eines Federsatzes auch bei Verwendung mehrerer ineinander angeordneter Federn innerhalb eines Federsatzes zu gewährleisten.

Die folgenden Vorteile ergeben sich aus der Erfindung:
- weniger Bauteile;
- Einsparungen an Bearbeitungsaufwand durch Funktions-Integration;
- einfache Führungs- und Anschlagherstellung;
- Reduzierung des Verschleißes an Federn und Führungselementen;
- nur wenige Bauteile (eines oder zwei) müssen mit hoher Toleranzgüte gefertigt werden;
- einfache Adaption an unterschiedliche Federbestückungen
- Realisierung einer größeren Auflagefläche zwischen Führungs- und Anschlageinrichtung und Feder, somit durch die geringere Flächenpressung aufgrund der größeren Fläche ein geringerer Verschleiß an dieser Stelle
- Übertragung einer Kraft auch auf die inneren Federn bei Verwendung mehrerer ineinander angeordneter Federn innerhalb eines Federsatzes.

Das gegebenenfalls bogenförmige Führungselement kann als Spritzgussteil aus Kunststoff gefertigt werden. Es kann massiv ausgeführt sein. Es kann als tiefgezogenes Blechteil ausgeführt sein. Bei der Montage lässt es - abhängig von der gewählten Ausführungsform - sich wie folgt einbringen:
- durch Einclipsen;
- durch Einlegen;
- durch Einnieten;
- durch Verschweißen.

Es kommen als Werkstoff für die Führungs- und Anschlageinrichtung jegliche Art von Metallen oder Keramik oder Kunststoffen oder Verbundmaterialien in Betracht. Wesentlich sind gute Gleiteigenschaften und günstige Verschleißeigenschaften.

Die Erfindung ist anhand der Zeichnung näher erläutert. Darin ist im einzelnen Folgendes dargestellt:
- Figur 1a: zeigt einen Torsionsschwingungsdämpfer in einem achssenkrechten Schnitt mit Anlageflächen der beiden Seitenscheiben.
- Figur 1b: zeigt einen Torsionsschwingungsdämpfer in einem achssenkrechten Schnitt mit Anlageflächen der beiden Anschlagbacken.
- Figur 2: zeigt den Gegenstand von Figur 1a in einer Seitenansicht, somit in Achsrichtung gesehen, wobei aus Gründen der Klarheit Teile weggelassen sind.
- Figur 3: zeigt eine Führungs- und Anschlageinrichtung in Draufsicht.
- Figur 4: zeigt den Gegenstand von Figur 3, verkleinert, in perspektivischer Darstellung.
- Figur 5: ist eine Schnittansicht gemäß der Schnittlinie A - A von Figur 3.
- Figur 6: ist eine Ansicht B - B aus Figur 3.
- Figur 7: zeigt die Führungs- und Anschlageinrichtung in Massivausführung.
- Figur 8: ist eine Schnittansicht gemäß der Schnittlinie A - A von Figur 7.
- Figur 9: ist eine perspektivische Darstellung des Gegenstandes von Figur 7.

Der in den Figuren 1a und 1b gezeigte Torsionsschwingungsdämpfer umfasst jeweils ein Primärteil mit zwei Seitenscheiben 1, 2, die drehfest miteinander verbunden sind. Ferner ist ein Sekundärteil vorgesehen, umfassend eine Mittelscheibe 3, die zwischen den Seitenscheiben 1, 2 angeordnet ist. Ein Gehäuse 4 umschließt Primärteil und Sekundärteil und ist selbst Bestandteil des Primärteiles.

Man erkennt eine Feder 5. Diese ist bogenförmig gestaltet, kann aber auch geradlinig beziehungsweise zylindrisch gestaltet sein. Die Feder 5 befindet sich radial innerhalb der Innenwand 6 eines Dämpfungskammersegmentes.

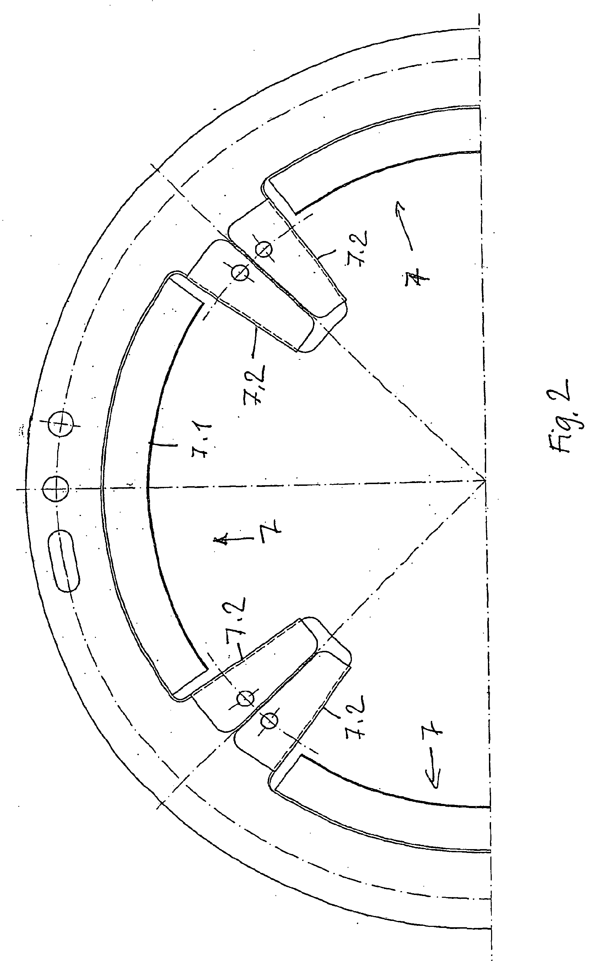

Das entscheidende Bauteil ist die Führungs- und Anschlageinrichtung 7, siehe auch die Figuren 2 bis 4. Die Feder/Federn können in einem Federfenstersegment angeordnet sein. Jedem Federfenstersegment zur Aufnahme eines Federsatzes aus jeweils mindestens einer Bogenfeder sind zwei Führungs- und Anschlageinrichtungen 7 zugeordnet, jeweils eine axial auf jeder Seite der betreffenden Bogenfeder. Jede Führungseinrichtung 7 ist aus Stahlblech im Tiefziehverfahren hergestellt. Diese weist ein Führungselement 7.1 auf. Letzteres hat ein im Wesentlichen U-förmiges Profil mit einem ersten Schenkel 7.1.1, einem zweiten Schenkel 7.1.2 und einem Steg 7.1.3. Der Schenkel 7.1.1 liegt an der Bogenfeder an. Der Schenkel 7.1.2 verläuft achsparallel. Er stützt sich an der betreffenden Seitenscheibe 1 beziehungsweise 2 ab, außerdem an der radial inneren Begrenzungsfläche der Dämpfungskammerwand 6 am Dämpfungssegment. Selbstverständlich kann anstelle von Stahlblech auch ein anderes geeignetes Blechmaterial, zum Beispiel Aluminiumblech verwendet werden. Die Führungselemente sind nicht auf den vorteilhaften Einsatz für Bogenfedern beschränkt, sondern können auch für geradlinige beziehungsweise zylindrische Federn anstelle von Bogenfedern verwendet werden.

Das Führungselement 7.1 dient zugleich der radial inneren Abstützung und Führung des Dämpfungskammersegmentes.

Wichtig ist, dass die beiden Führungselemente 7.1 einen solchen gegenseitigen axialen Abstand haben, dass die Mittelscheibe 3 zwischen diesen hindurchgreifen kann. Hierdurch können die Dämpfungskammersegmente auf einem großen Radius liegen und demgemäß auch eine entsprechend hohe Wirkung entfalten.

Das Gehäuse 4 weist zwei Anschläge 4.1 und 4.2 auf. Diese dienen zum Abstützen des radial äußeren Schenkels 7.1.2 des Führungselementes 7.1 gegen den von der Dämpfungskammer ausgeübten, radial einwärts wirkenden Druck.

Aus Figur 2 erkennt man eine vollständige Führungs- und Anschlageinrichtung 7 mit dem Führungselement 7.1 sowie mit zwei Backen 7.2 und 7.2. Die beiden Backen 7.2, 7.2 dienen zum Zusammenwirken mit entsprechenden Anlageflächen der Seitenscheiben 1 und 2. In Figur 1a sind Anlageflächen der Seitenscheibe 1 zu erkennen, schraffiert dargestellt. In Figur 1b sind Anlageflächen der beiden Anschlagbacken zu erkennen, schraffiert dargestellt.

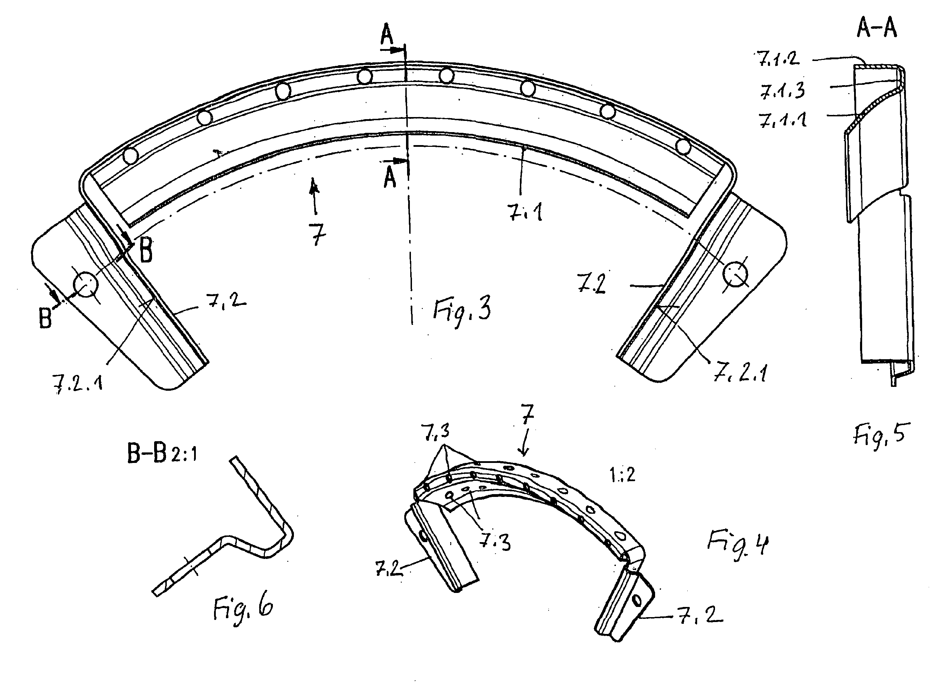

Die Figuren 3 bis 6 lassen die Einzelheiten der Führungs- und Anschlageinrichtung 7 erkennen. Das bogenförmige Führungselement 7.1 ist aus einem Stahlblech hergestellt. Figur 5 lässt dies besonders gut erkennen. Siehe dort die beiden Schenkel 7.1.1 und 7.1.2 des U-Profiles sowie den dazwischen befindlichen Steg 7.1.3. Auch die beiden Backen 7.2 und 7.2 sind aus einem Stahlblech hergestellt, und zwar einteilig mit dem bogenförmigen Führungselement 7.1.

In Figur 3 sind die Anschlagflächen der beiden Backen 7.2, 7.2 näher bezeichnet, die mit der betreffenden Seitenscheibe 1 und 2 zusammenarbeiten.

Die Figuren 3 und 4 zeigen eine Mehrzahl von Öffnungen 7.3. Diese haben die folgende Bedeutung:
Wie aus den Figuren 1a und 1b erkennbar, befindet sich im Bereich axial zwischen den Wandungen des Gehäuses 4 und der von der Feder 5 abgewandten Seite des Führungselementes 7.1 ein Totraum. Dieser kann sich im Laufe des Betriebes mit Dämpfungsmedium oder Schmierfett füllen, zum Beispiel dadurch, dass das Medium während des Betriebes durch Fliehkraft oder infolge der Schwerkraft während des Stillstandes in den Totraum eintritt. Da der Totraum durch die Blechkontur des Führungselementes 7.1 weitgehend vom übrigen Innenraum des Gehäuses 4 abgetrennt ist, kann im Totraum befindliches Dämpfungsmedium oder Schmierfett nicht mehr oder nur sehr schlecht zum Arbeitsvorrat des Dämpfungsmediums oder Schmierfettes zurückgeführt werden.

Eine Mehrzahl von Durchtrittsöffnungen 7.3 sorgt für Abhilfe. Die Durchtrittsöffnungen erlauben ein Zurückfließen des Mediums aus dem Totraum in den übrigen Innenraum des Gehäuses 4; das zurückgeflossene Medium wird somit für den Betrieb wieder genutzt. Es wird zum Beispiel eine verbesserte oder infolge optimierter Dämpfungsmedienfüllung gleichmäßigere hydraulische Dämpfung erzeugt. Ferner lassen sich die Durchflussöffnungen 7.3 optimieren und gezielt auslegen, sodass der Schmierstoff gezielt zu wichtigen Zonen in Kontakt zwischen relativ zueinander bewegten Bauteilen geführt wird, beispielsweise zwischen Feder 5 und Führungseinrichtung 7, sodass ein Verschleiß verringert oder beseitigt wird.

Die Durchflussöffnungen 7.3 erlauben im dargestellten Ausführungsbeispiel ein Strömen in axialer Richtung. Die Durchflussöffnungen 7.3 können jedoch auch derart angeordnet werden, dass eine Strömung in radialer Richtung verläuft, innen der Federführungsfläche zugeordnet, oder außen in Richtung der Dämpfungskammer - siehe Figur 4.

Bei Ausführung der Führungs- und Anschlageinrichtung 7 als Tiefziehteil können die Durchtrittsöffnungen 7.3 im Schenkel 7.1.1 und/oder Schenkel 7.1.2 und/oder Steg 7.1.3 des Führungselementes 7.1 eingebracht sein.

Die genannten Durchflussöffnungen 7.3 können auch an Spritzgussbauteilen ausgeführt werden, oder an Bauteilen, die aus dem Vollen gefertigt sind - hier nicht dargestellt.

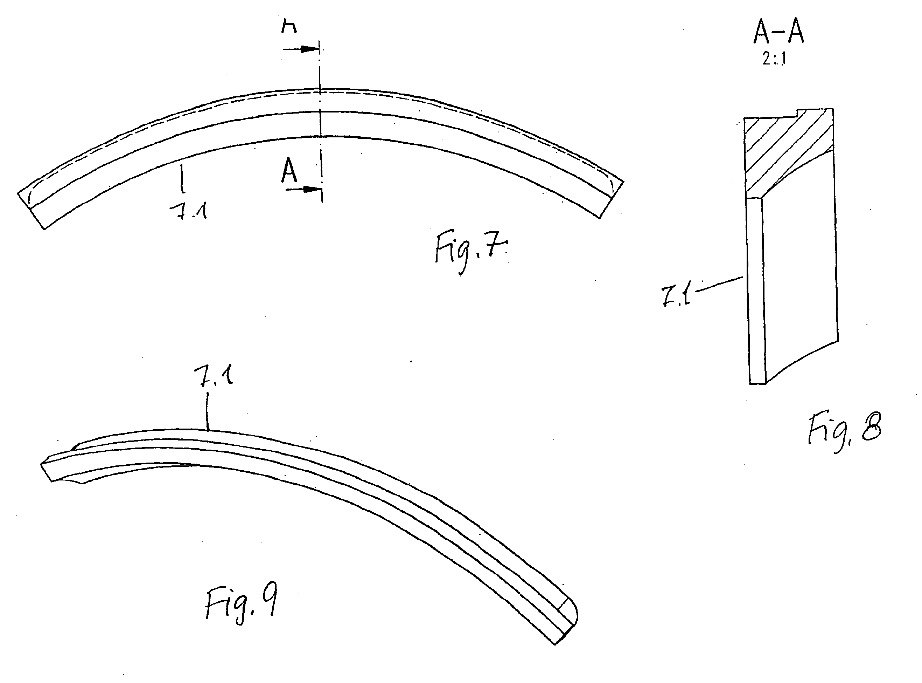

Das in den Figuren 7 bis 9 dargestellte bogenförmige Führungselement 7.1 ist massiv ausgeführt. Es kann wiederum aus jeglichem Material bestehen - Kunststoff, Metall, Keramik oder einem Verbundwerkstoff. Es versteht sich, dass Führungselemente 7.1 wieder paarweise angeordnet werden, genauso wie bei den Ausführungen gemäß der Figuren 1a und 1b.

Die Anschlagbacken müssen nicht einteilig mit den Führungselementen sein. Die Führungselemente 7.1 können auch ohne Anschlagbacken ausgeführt sein. In diesem Fall sind die Anschlagflächen der Seitenscheiben und/oder der Mittelscheibe gehärtet oder mit "harter" Kappe ausgeführt.

Das Führungselement 7.1 dient im Allgemeinen zugleich der inneren Abstützung und Führung eines Segmentes einer Dämpfungskammer. Dies erkennt man aus den Figuren 1 a und 1b. Dort liegt der achsparallele Schenkel 7.1.2 an der Dämpfungskammerwand 6 an.

### Bezugszeichenliste

- 1: Seitenscheibe
- 1.1: Anlagefläche
- 2: Seitenscheibe
- 2.1: Anlagefläche
- 3: Mittelscheibe
- 4: Gehäuse
- 5: Feder
- 6: Dämpfungskammerwand
- 7: Führungs- und Anschlageinrichtung
- 7.1: bogenförmiges Führungselement
- 7.1.1: Schenkel des U-Profils
- 7.1.2: Schenkel des U-Profils
- 7.1.3: Steg
- 7.2: Backen
- 7.3: Durchflussöffnung

## Patentansprüche

1. Torsionsschwingungsdämpfer, umfassend die folgenden Merkmale:
ein Primärteil mit zwei Seitenscheiben (1) und (2), die drehfest miteinander verbunden sind;
ein Sekundärteil mit einer Mittelscheibe (3), die zwischen den Seitenscheiben (1) und (2) angeordnet ist;
Primärteil und Sekundärteil stehen über Federn (5) miteinander in Drehverbindung;
Dämpfungskammern, die mit einem Dämpfungsmedium gefüllt sind und jeweils wenigstens eine Drosselöffnung aufweisen;
zum Abstützen und Führen der Federn (5) sind Führungselemente (7.1) vorgesehen;
jeder Feder (5) sind zwei Führungselemente (7.1) zugeordnet, die beide in einem gegenseitigen axialen Abstand angeordnet sind, und die Stützflächen gegen eine Bewegung der Feder (5) in radialer wie auch in axialer Richtung bilden; **dadurch**
**gekennzeichnet dass** die Führungselemente (7.1) mit den Seitenscheiben (1) und(2) mitnahmefest verbunden sind.

2. Torsionsschwingungsdämpfer nach Anspruch 1, **dadurch gekennzeichnet, dass** die Federn (5) Bogenfedern sind.

3. Torsionsschwingungsdämpfer nach Anspruch 1 oder 2,
**gekennzeichnet durch** die folgenden Merkmale:
jedes Führungselement (7.1) weist an jedem Ende einen Anschlagbacken (7.2) zum Abstützen der Feder (5) beziehungsweise eines Federsatzes mit innerhalb einer äußeren Feder angeordneten inneren Federn an den Seitenscheiben (1, 2) bei Verdrehung zwischen Primär- und Sekundärteil auf.

4. Torsionsschwingungsdämpfer nach Anspruch 3, **dadurch gekennzeichnet, dass** das Führungselement (7.1) und die Anschlagbacken (7.2) und (7.2) einteilig sind.

5. Torsionsschwingungsdämpfer nach Anspruch 4, **dadurch gekennzeichnet, dass** das Führungselement (7.1) und Anschlagbacken (7.2) und (7.2) in einem einzigen Arbeitsgang hergestellt sind.

6. Torsionsschwingungsdämpfer nach einem der Ansprüche 3 bis 5, **dadurch gekennzeichnet, dass** wenigstens eines der Elemente Führungselement (7.1) und Anschlagbacken (7.2) und (7.2) aus Stahlblech bestehen.

7. Torsionsschwingungsdämpfer nach einem der Ansprüche 2 bis 6, **dadurch gekennzeichnet, dass** wenigstens eines der Elemente Führungselement (7.1) und Anschlagbacken (7.2) und (7.2) massiv sind.

8. Torsionsschwingungsdämpfer nach einem der Ansprüche 1 bis 7, **dadurch gekennzeichnet, dass** die Seitenscheiben (1) und (2) Anlageflächen (1.1, 2.1) aufweisen, die mit den Anschlagbacken (7.2) und (7.2) zusammenarbeiten.

9. Torsionsschwingungsdämpfer nach einem der Ansprüche 1 bis 8, **dadurch gekennzeichnet, dass** als Anschlagbacken separate Bauteile vorgesehen sind, die massiv oder als Spritzgussteil oder als Tiefziehbauteil ausgeführt sind.

10. Torsionsschwingungsdämpfer nach den Ansprüchen 1 bis 3 und 6 bis 9, **dadurch gekennzeichnet, dass** die Seitenscheiben (1, 2) mit Flächen ausgestattet sind, die als Anschlagbacken dienen.

11. Torsionsschwingungsdämpfer nach einem der Ansprüche 1 bis 3 oder 6 bis 9, **dadurch gekennzeichnet, dass** die Anschlagbacken jeweils als separates Bauteil ausgeführt sind, das insbesondere massiv ist, oder als Spritzgussteil oder als Tiefziehbauteil ausgeführt ist.

12. Torsionsschwingungsdämpfer nach einem der Ansprüche 1 bis 11, **dadurch gekennzeichnet, dass** die Führungselemente (7.1) der radial inneren Abstützung und/oder Abdichtung einer Dämpfungskammer dienen.

13. Torsionsschwingungsdämpfer nach einem der Ansprüche 1 bis 8, **dadurch gekennzeichnet, dass** die beiden Führungselemente (7.1, 7.1) in einem Axialschnitt durch die Drehachse des Torsionsschwingungsdämpfers gesehen einen solchen gegenseitigen axialen Abstand aufweisen, dass die Mittelscheibe (3) zwischen den beiden Führungselementen (7.1, 7.1) radial nach außen hindurchführbar ist.

14. Torsionsschwingungsdämpfer nach einem der Ansprüche 1 bis 13, **dadurch gekennzeichnet, dass** die Dämpfungskammern segmentartig über den Außenumfang des Torsionsschwingungsdämpfers angeordnet sind, und die Federn (5) radial innerhalb der Dämpfungskammern, insbesondere radial innerhalb der radial inneren Begrenzungsfläche der Dämpfungskammerwand (6) positioniert sind.

15. Torsionsschwingungsdämpfer nach einem der Ansprüche 1 bis 14, **dadurch gekennzeichnet, dass** ein Gehäuse (4) vorgesehen ist, welches das Primärteil und das Sekundärteil wenigstens teilweise umschließt, wobei Gehäuse (4), Primärteil und Sekundärteil eine Baueinheit bilden.

16. Torsionsschwingungsdämpfer nach einem der Ansprüche 1 bis 15, **dadurch gekennzeichnet, dass** das Führungselement (7.1) eine Mehrzahl von Durchtrittsöffnungen (7.3) zum Hindurchführen von Dämpfungsmedium oder Schmierfett, welche insbesondere als Durchgangsbohrungen ausgeführt sind, umfasst.

## Claims

1. A torsional vibration damper, comprising the following features:
a primary part with two lateral disks (1) and (2) which are connected to each other in a torsion-proof manner;
a secondary part with a middle disk (3) which is arranged between the lateral disks (1) and (2);
the primary part and the secondary part are in rotational connection with each other via springs (5);
damping chambers which are filled with a damping medium and respectively comprise at least one throttling opening;
guide elements (7.1) are provided for supporting and guiding the springs (5);
two guide elements (7.1) are associated with each spring (5), which are both arranged at a mutual axial distance from each other and form the support surfaces against a movement of the spring (5) in the radial and also the axial direction;
**characterized in that** the guide elements (7.1) with the lateral disks (1) and (2) are connected to each other in an entrainment-free manner.

2. A torsional vibration damper according to claim 1, **characterized in that** the springs (5) are bow springs.

3. A torsional vibration damper according to claim 1 or 2, **characterized by** the following features:
each guide element (7.1) comprises at each end a stop cheek (7.2) for supporting the spring (5) or a spring assembly with inner springs arranged within an outer spring on the lateral disks (1, 2) when twisting between primary and secondary part.

4. A torsional vibration damper according to claim 3, **characterized in that** the guide element (7.1) and the stop cheeks (7.2) and (7.2) are integral.

5. A torsional vibration damper according to claim 4, **characterized in that** the guide element (7.1) and the stop cheeks (7.2) and (7.2) are produced in one single operation.

6. A torsional vibration damper according to one of the claims 3 to 5, **characterized in that** at least one of the elements of guide element (7.1) and stop cheeks (7.2) and (7.2) consists of steel sheet.

7. A torsional vibration damper according to one of the claims 2 to 6, **characterized in that** at least one of the elements of guide element (7.1) and stop cheeks (7.2) and (7.2) is massive.

8. A torsional vibration damper according to one of the claims 1 to 7, **characterized in that** the lateral disks (1) and (2) comprise stop surfaces (1.1, 2.1) which cooperate with the stop cheeks (7.2) and (7.2).

9. A torsional vibration damper according to one of the claims 1 to 8, **characterized in that** separate components are provided as stop cheeks, which are arranged either massively or as an injection-molded part or as a deep-drawn component.

10. A torsional vibration damper according to one of the claims 1 to 3 and 6 to 9, **characterized in that** the lateral disks (1, 2) are provided with areas which are used as stop cheeks.

11. A torsional vibration damper according to one of the claims 1 to 3 or 6 to 9, **characterized in that** the stop cheeks are respectively arranged as a separate component which is especially massive, or as an injection-molded part or as a deep-drawn component.

12. A torsional vibration damper according to one of the claims 1 to 11, **characterized in that** the guide elements (7.1) are used for radially inner support and/or sealing of a damping chamber.

13. A torsional vibration damper according to one of the claims 1 to 8, **characterized in that** the two guide elements (7.1, 7.1), as seen in an axial sectional view through the rotational axis of the torsional vibration damper, have such a mutual axial distance from each other that the middle disk (3) can be guided radially to the outside between the two guide elements (7.1, 7.1).

14. A torsional vibration damper according to one of the claims 1 to 13, **characterized in that** the damping chambers are arranged in a segment-like manner over the external circumference of the torsional vibration damper, and the springs (5) are positioned radially within the damping chambers, especially radially within the radially inner boundary surface of the damping chamber wall (6).

15. A torsional vibration damper according to one of the claims 1 to 14, **characterized in that** a housing (4) is provided which encloses the primary part and the secondary part at least in part, with the housing (4), the primary part and the secondary part forming a modular unit.

16. A torsional vibration damper according to one of the claims 1 to 15, **characterized in that** the guide element (7.1) comprises a plurality of passage openings (7.3) for guiding through damping medium or lubricating grease, said openings being especially arranged as through-holes.

## Revendications

1. Amortisseur de vibrations en torsion comprenant les caractéristiques suivantes :
une partie primaire avec deux disques latéraux (1) et (2), reliés entre deux de façon solidaire en rotation ;
une partie secondaire avec un disque intermédiaire (3) disposé entre les disques latéraux (1) et (2) ;
la partie primaire et la partie secondaire sont reliées en rotation par l'intermédiaire de ressorts (5) ;
des compartiments d'amortissement remplis d'un fluide d'amortissement qui présentent chacun au moins un étranglement ;
des éléments de guidage (7.1) sont prévus pour soutenir et guider les ressorts (5) ;
chaque ressort (5) est associé à deux éléments de guidage (7.1) qui sont tous deux disposés à une distance axiale l'un de l'autre et forment les surfaces d'appui contre un mouvement des ressorts (5) dans le sens radial et axial ;
**caractérisé en ce que** les éléments de guidage (7.1) sont reliés avec les disques latéraux (1) et (2) d'une façon solidaire en entraînement.

2. Amortisseur de vibrations en torsion selon la revendication 1, **caractérisé en ce que** les ressorts (5) sont des ressorts en arc.

3. Amortisseur de vibrations en torsion selon la revendication 1 ou 2, **caractérisé en ce que** chaque élément de guidage (7.1) présente à chaque extrémité un mors de butée (7.2) pour l'appui des ressorts (5) ou d'un jeu de ressorts avec des ressorts intérieurs disposés à l'intérieur d'un ressort extérieur sur les disques latéraux (1, 2) lors d'une rotation entre la partie primaire et la partie secondaire.

4. Amortisseur de vibrations en torsion selon la revendication 3, **caractérisé en ce que** l'élément de guidage (7.1) et les mors de butée (7.2) et (7.2) sont d'une pièce.

5. Amortisseur de vibrations en torsion selon la revendication 4, **caractérisé en ce que** l'élément de guidage (7.1) et les mors de butée (7.2) et (7.2) sont fabriqués en une seule étape de travail.

6. Amortisseur de vibrations en torsion selon l'une des revendications 3 à 5, **caractérisé en ce qu'**au moins un des éléments parmi l'élément de guidage (7.1) et les mors de butée (7.2) et (7.2) est fait de tôle d'acier.

7. Amortisseur de vibrations en torsion selon l'une des revendications 2 à 6, **caractérisé en ce qu'**au moins un des éléments parmi l'élément de guidage (7.1) et les mors de butée (7.2) et (7.2) est massif.

8. Amortisseur de vibrations en torsion selon l'une des revendications 1 à 7, **caractérisé en ce que** les disques latéraux (1) et (2) présentent des surfaces d'appui (1.1, 2.1) qui coopèrent avec les mors de butée (7.2) et (7.2).

9. Amortisseur de vibrations en torsion selon l'une des revendications 1 à 8, **caractérisé en ce que** sont prévus comme mors de butée des composants séparés qui sont réalisés sous une forme massive ou par moulage par injection ou par emboutissage profond.

10. Amortisseur de vibrations en torsion selon les revendications 1 à 3 et 6 à 9, **caractérisé en ce que** les disques latéraux (1, 2) sont munis de surfaces qui servent de mors de butée.

11. Amortisseur de vibrations en torsion selon l'une des revendications 1 à 3 ou 6 à 9, **caractérisé en ce que** les mors de butée sont réalisés chacun comme un composant séparé, qui est en particulier massif ou qui est produit par moulage par injection ou par emboutissage profond.

12. Amortisseur de vibrations en torsion selon l'une des revendications 1 à 11, **caractérisé en ce que** les éléments de guidage (7.1) servent au soutien intérieur dans le sens radial et/ou à l'étanchéité d'un compartiment d'amortissement.

13. Amortisseur de vibrations en torsion selon l'une des revendications 1 à 8, **caractérisé en ce que** les deux éléments de guidage (7.1, 7.1), vus en coupe axiale passant par l'axe de rotation de l'amortisseur de vibrations en torsion, présentent une distance axiale entre eux telle que le disque intermédiaire (3) puisse passer radialement vers l'extérieur entre les deux éléments de guidage (7.1, 7.1).

14. Amortisseur de vibrations en torsion selon l'une des revendications 1 à 13, **caractérisé en ce que** les compartiments d'amortissement sont disposés par segments sur la circonférence extérieure de l'amortisseur de vibrations en torsion et les ressorts (5) sont positionnés à l'intérieur dans le sens radial des compartiments d'amortissement, en particulier à l'intérieur dans le sens radial de la surface de délimitation intérieure de la paroi (6) des compartiments d'amortissement.

15. Amortisseur de vibrations en torsion selon l'une des revendications 1 à 14, **caractérisé en ce qu'**il est prévu un boîtier (4) qui entoure au moins partiellement la partie primaire et la partie secondaire, le boîtier (4), la partie primaire et la partie secondaire formant une unité de construction.

16. Amortisseur de vibrations en torsion selon l'une des revendications 1 à 15, **caractérisé en ce que** l'élément de guidage (7.1) présente une pluralité d'ouvertures de passage (7.3) pour le passage de fluide d'amortissement ou de graisse de lubrification, qui sont réalisées en particulier comme des alésages traversants.
